# EUROPEAN PATENT APPLICATION

(11) **EP 1 505 779 A1**
(43) Date of publication of application: **09.02.2005**
(21) Application number: 02807438.3
(22) Date of filing: 15.05.2002
(51) Int. Cl.: H04L 12/56

(54) **PACKET SCHEDULING SYSTEM AND PACKET SCHEDULING METHOD**

(71) Applicant: MITSUBISHI DENKI KABUSHIKI KAISHA, Tokyo 100-8310 (JP)
(72) Inventor: OKUBO, Keiji, Mitsubishi Denki Kabushiki Kaisha, Chiyoda-ku, Tokyo 100-8310 (JP)
(74) Representative: Sajda, Wolf E., Dipl.-Phys.
(86) International application number: PCT/JP2002/004672
(87) International publication number: WO 2003/098883

(57) **Abstract**

A packet scheduling system which controls traffic interference between VPNs is provided. The packet scheduling system comprises a queuing destination judging part 5 which distributes a data packet inputted, a first-step scheduling part 6-1∼6-m which includes a plurality of queuing parts 7-1∼7-n for accumulating the data packet distributed for each of a plurality of specific groups by the queuing destination judging part 5, to be corresponding to each of quality classes, and a read-out control part 8 for controlling reading out the data packet, and a second-step scheduling part which has a plurality of the first-step scheduling parts 6-1∼6-m corresponding to a plurality of the specific groups and includes a read-out control part 11 for controlling the data packet to be read out from the first-step scheduling part corresponding to each of a plurality of the specific groups.

## Description

### Technical Field

The present invention relates to a packet switching apparatus and a technology for realizing required traffic characteristics corresponding to various services provided by the packet switching apparatus. The present invention especially relates to a packet scheduling technology for improving the quality of services for specific groups, such as a VPN (Virtual Private Network) service, by removing traffic interference between specific groups like VPN and effectively treating traffic of a plurality of different quality classes.

### Background Art

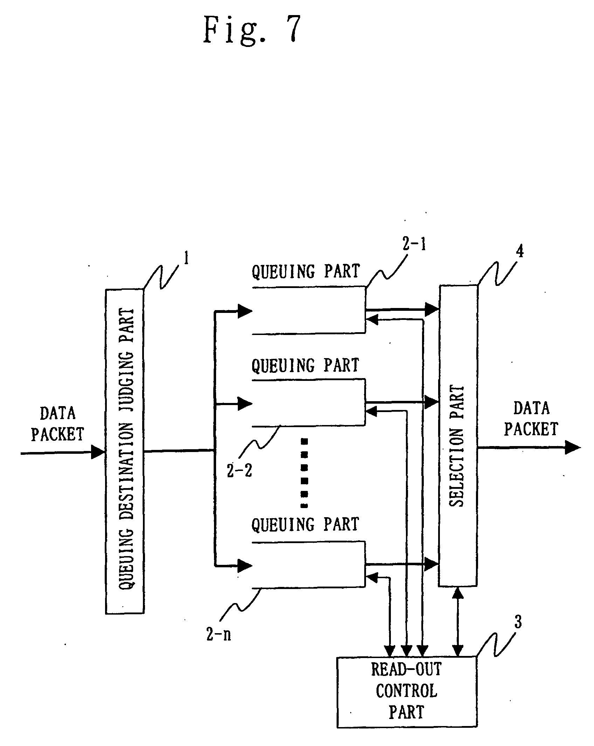

Fig. 7 is an example of a block diagram showing a configuration of a conventional packet scheduling system.

A queuing destination judging part 1, queuing parts 2-1∼2-n, a read-out control part 3, and a selection part (SEL) 4 are included in the packet scheduling system of Fig. 7. The queuing destination judging part 1 distributes a data packet based on a quality class. The queuing parts 2-1∼2-n accumulate data packets distributed by the queuing destination judging part 1 to be corresponding to n quality classes. The read-out control part 3 reads a data packet from n queuing parts 2-1∼2-n according to a priority of each quality class. The selection part 4 selects a data packet to output, from one of the n queuing parts 2-1∼2-n based on control of the read-out control part 3.

It is supposed that there are n quality classes (n is an arbitrary integer).

Now, operations will be explained. The queuing destination judging part 1 inputs a data packet, recognizes the quality class of the input data packet, and distributes the input data packet to one of the queuing parts 2-1∼2-n provided to be corresponding to the n quality classes.

The queuing parts 2-1∼2-n provided to be corresponding to the n quality classes accumulate data packets distributed by the queuing destination judging part 1.

Based on an accumulation state of the data packets in the queuing parts 2-1∼2-n provided to be corresponding to the n quality classes and a priority of each of the quality classes, the read-out control part 3 judges one queuing part to read in a plurality of the queuing parts 2-1∼2-n provided to be corresponding to the n quality classes, and sends an instruction to read out the accumulated data packets to the queuing part. Simultaneously, the read-out control part 3 sends the selection part 4 an instruction to select, and then a data packet is output.

As stated above, the queuing destination judging part 1 performs distribution of the quality classes, a plurality of the queuing parts 2-1∼2-n provided to be corresponding to the n quality classes performs accumulation, the read-out control part 3 performs reading out depending upon a accumulation state and a priority of each quality class, and the selection part 4 performs selection. Therefore, it is possible to output a data packet in a plurality of input data packets according to a priority of each quality class.

The conventional packet scheduling system is configured as mentioned above. Thus, when a network performs a VPN service, if a plurality of VPNs is accommodated in the same interface, scheduling is performed at each interface according to each quality class without separating traffic of each VPN.

Therefore, although the packet transmission according to each quality class can be executed, as there is no means to control traffic interference between VPNs, it causes a problem that the traffic interference may occur between the VPNs.

Then, it is an object of the present invention to improve the quality of the packet scheduling system and method in the service (for example, the VPN service) for a plurality of groups. The present invention aims at improving the quality of the packet scheduling system and method especially by removing traffic interference between a plurality of specific groups (for example, between a plurality of VPNs) and effectively treating traffic of a plurality of different quality classes in each group.

### Disclosure of the Invention

A packet scheduling system according to the present invention, which distributes a data packet inputted from at least one input interface to at least one output interface, it is a feature that the packet scheduling system includes:
a queuing destination judging part for inputting the data packet from the input interface and distributing the data packet inputted;
a plurality of first scheduling parts for inputting the data packet distributed by the queuing destination judging part, accumulating the data packet inputted, and controlling reading out data packet accumulated; and
a second scheduling part for inputting a plurality of data packets read out from the plurality of first scheduling parts, selecting one data packet from the plurality of data packets inputted, and outputting the one data packet selected to the output interface.

It is a feature that the plurality of first scheduling parts are provided to be corresponding to a plurality of groups composing a network, and
the queuing destination judging part judges the data packet with respect to the plurality of groups, selects one first scheduling part from the plurality of first scheduling parts based on a judging result, and distributes the data packet to the one first scheduling part selected.

It is a feature that each first scheduling part of the plurality of first scheduling parts includes a plurality of queuing parts for accumulating the data packet, provided to be corresponding to a number of qualities of data packet, and
the queuing destination judging part judges the data packet with respect to the qualities, selects one queuing part from the plurality of queuing parts based on a judging result, and distributes the data packet to the one queuing part selected.

It is a feature that each of the plurality of first scheduling parts includes
a first read-out control part for selecting one queuing part from the plurality of queuing parts and outputting an instruction to read out data packet accumulated in the one queuing part selected, and
a selection part for inputting the instruction from the first read-out control part, selecting the data packet accumulated in the one queuing part and reading out the data packet selected to the second scheduling part.

It is a feature that the first read-out control part selects one queuing part by using at least one of control of selecting the plurality of queuing parts in order, control of assigning a weight to each of the plurality of queuing parts and selecting one queuing part based on an assigned weight, and control of selecting one queuing part based on an accumulation state of each of the plurality of queuing parts.

It is a feature that each of the plurality of first scheduling parts further includes a first shaping part for generating bandwidth allocation information which defines a band allocated to each of the plurality of queuing parts when selecting one queuing part from the plurality of queuing parts, and
the first read-out control part selects one queuing part, based on the bandwidth allocation information generated by the first shaping part.

It is a feature that the plurality of first scheduling parts are provided to be corresponding to a plurality of groups composing a network,
each of the plurality of first scheduling parts includes a plurality of queuing parts for accumulating the data packet, provided to be corresponding to a number of qualities of data packet, and
the queuing destination judging part judges the data packet with respect to the plurality of groups and the qualities, selects one first scheduling part from the plurality of first scheduling parts based on a judging result, and distributes the data packet to the one first scheduling part selected.

A packet scheduling system according to the present invention, which distributes a data packet inputted from at least one input interface to at least one output interface, it is a feature that the packet scheduling system includes:
a queuing destination judging part for inputting the data packet from the input interface and distributing the data packet inputted;
a plurality of first scheduling parts for inputting the data packet distributed by the queuing destination judging part, accumulating the data packet inputted, and controlling reading out data packet accumulated;
a plurality of second scheduling parts for inputting a plurality of data packets read out from the plurality of first scheduling parts, and controlling outputting the plurality of data packets inputted; and
a conflict control part for inputting the plurality of data packets output one by one from each of the plurality of second scheduling parts, selecting one data packet from the plurality of data packets inputted, and outputting the one data packet selected to the output interface.

It is a feature that each of the plurality of first scheduling parts includes a plurality of queuing parts for accumulating the data packet, provided to be corresponding to a number of qualities of data packet, and
the queuing destination judging part judges the data packet with respect to the qualities, selects one queuing part from the plurality of queuing parts based on a judging result, and distributes the data packet to the one queuing part selected.

It is a feature that the output interface includes a plurality of ports,
the plurality of first scheduling parts are provided to be corresponding to a plurality of groups composing a network,
the plurality of second scheduling parts are provided to be corresponding to the plurality of ports, and related to the first scheduling part, and
the queuing destination judging part judges the data packet based on the plurality of groups and the plurality of ports, selects one first scheduling part from the plurality of first scheduling parts based on a judging result, and distributes the data packet to the one first scheduling part selected.

It is a feature that each of the plurality of second scheduling parts includes:
a second shaping part for generating bandwidth allocation information which defines a band allocated to each of the plurality of first scheduling parts when selecting one first scheduling part from the plurality of first scheduling parts,
a second read-out control part for selecting one first scheduling part from the plurality of first scheduling parts, based on the bandwidth allocation information generated by the second shaping part, and sending an instruction to output the data packet inputted from the one first scheduling part selected, and
a selection part for inputting the instruction from the second read-out control part, and outputting the data packet inputted from the one first scheduling part selected to the conflict control part, based on the instruction inputted.

It is a feature that the output interface includes a plurality of ports,
the plurality of first scheduling parts are provided to be corresponding to a plurality of groups composing a network, and each of the plurality of first scheduling parts includes a plurality of queuing parts for accumulating the data packet, provided to be corresponding to a number of a plurality of qualities of data packet,
the plurality of second scheduling parts are provided to be corresponding to the plurality of ports, and related to the first scheduling part, and
the queuing destination judging part judges the data packet with respect to the plurality of qualities, the plurality of groups, and the plurality of ports, selects one first scheduling part from the plurality of first scheduling parts based on a judging result, and distributes the data packet to the one first scheduling part selected.

A packet scheduling method according to the present invention, which distributes a data packet inputted from at least one input interface to at least one output interface, through a plurality of first scheduling parts which perform scheduling based on a quality of the data packet and a second scheduling part which performs scheduling based on a plurality of groups composing a network, it is a feature that the packet scheduling method includes:
inputting the data packet from the input interface;
discerning the data packet inputted, based on the quality of the data packet and the plurality of groups;
distributing the data packet to one of the plurality of first scheduling parts, based on a discerning result;
accumulating the data packet distributed, in the plurality of first scheduling parts;
discerning reading out of the data packet accumulated, based on the quality;
reading out the data packet from the plurality of first scheduling parts to the second scheduling part, based on a discerning result;
discerning a plurality of data packets inputted into the second scheduling part with respect to the plurality of groups;
selecting one data packet from the plurality of data packets, based on a discerning result; and
outputting the data packet selected to the output interface.

### Brief Description of the Drawings

Fig. 1 is a block diagram showing an example of a packet scheduling system of Embodiment 1 according to the present invention;
Fig. 2 is a flowchart showing an example of operations of the packet scheduling system of Embodiment 1;
Fig. 3 is a block diagram showing an example of a packet scheduling system of Embodiment 2 according to the present invention;
Fig. 4 is a flowchart showing an example of operations of the packet scheduling system of Embodiment 2;
Fig. 5 is a block diagram showing an example of a packet scheduling system of Embodiment 3 according to the present invention;
Fig. 6 is a flowchart showing an example of operations of the packet scheduling system of Embodiment 3; and
Fig. 7 is a block diagram showing an example of ac conventional packet scheduling system.

### Best Mode for Carrying Out the Invention

### Embodiment 1

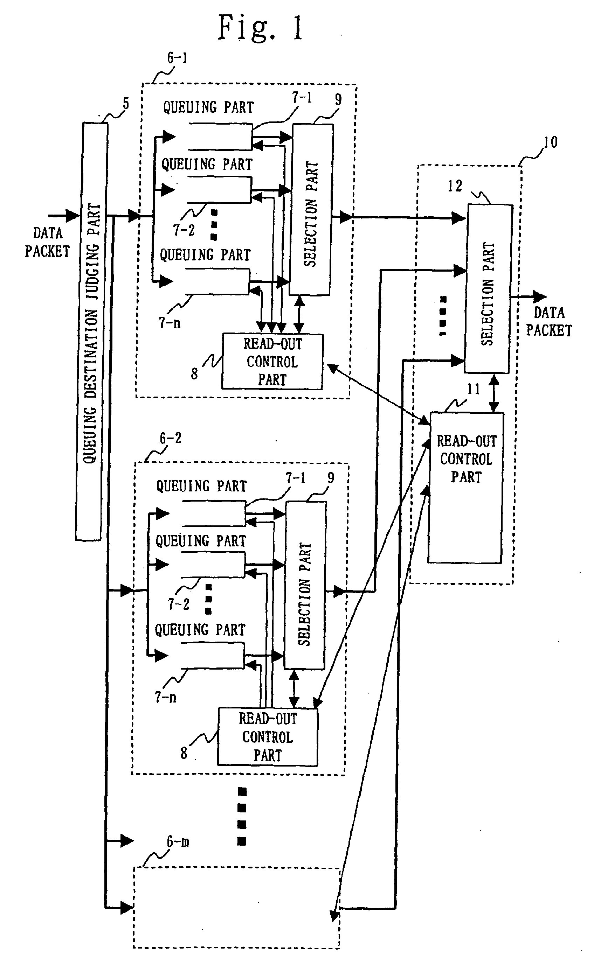

Embodiment 1 of the present invention will now be explained with reference to a figure. Fig. 1 shows an example of a packet scheduling system according to Embodiment 1. A queuing destination judging part 5, first-step scheduling parts 6-1∼6-m, queuing parts 7-1∼7-n, a read-out control part 8, a selection part 9, a second-step scheduling part 10, a read-out control part 11, and a selection part 12 are included in the packet scheduling system of Fig. 1. The above-mentioned packet scheduling system is a system applied to a packet switching apparatus.

The first-step scheduling part can also be called a first scheduling part. The second-step scheduling part can also be called a second scheduling part. The read-out control part 8 can also be called a first read-out control part. The read-out control part 11 can also be called a second read-out control part.

In addition, though not shown in Fig. 1, a data packet is input through one input interface (input interface part) or a plurality of input interfaces. The input data packet is distributed to one output interface (output interface part) or a plurality of output interfaces. In the explanation stated below, the case of data packets being scheduled on one arbitrary output interface in a plurality of output interfaces will be described.

The input interface is an interface which inputs a data packet into the queuing destination judging part 5. The output interface is an interface which outputs a data packet from the present scheduling system (in Embodiment 1, the selection part 9). As an example, an interface portion of a switching apparatus which connects a network with the scheduling system can be the interface.

A data packet to input is scheduled among a plurality of specific groups (ex. groups set at VNP ( virtual closed network, virtual private network)). A plurality of specific groups are groups which configure a network used by predetermined users.

Moreover, the above data packet is scheduled per quality class in each group. The "quality class" can be just called "quality." The quality class shows a class (level) of quality. For example, there is a class of quality, such as a delay and an abandonment rate, required for each service.

Hereafter, explanation will be described supposing that the number of a plurality of groups is m and the number of quality classes is n. m and n are arbitrary integers.

The queuing destination judging part 5 distributes data packets. The first-step scheduling parts 6-1∼6-m are provided to be corresponding to m specific groups, and perform scheduling with respect to n quality classes.

The queuing parts 7-1∼7-n in the first-step scheduling parts 6-1∼6-m accumulate data packets distributed by the queuing destination judging part 5, per class of the n quality classes.

The read-out control part 8 in the first-step scheduling parts 6-1∼6-m reads out data packets from the n queuing parts 7-1∼7-n provided to be corresponding to quality classes, according to priority of each of the quality classes.

The selection part 9 in each of the first-step scheduling parts 6-1∼6-m selects data packets output from the n queuing parts 7-1∼7-n based on control of the read-out control part 8, and outputs the selected data packets from the first-step scheduling parts 6-1∼6-m.

For the outputs from the first-step scheduling parts 6-1∼6-m, the second-step scheduling part 10 performs scheduling with respect to m specific groups, and outputs the data packets.

For the m outputs from the first-step scheduling parts 6-1∼6-m, the read-out control part 11 in the second-step scheduling part 10 performs reading out according to bandwidth allocation corresponding to each of the m specific groups.

The selection part 12 in the second-step scheduling part 10 selects one of in data packets output from the m first-step scheduling parts 6-1∼6-m, based on a control of the read-out control part 11, and outputs the selected data packet.

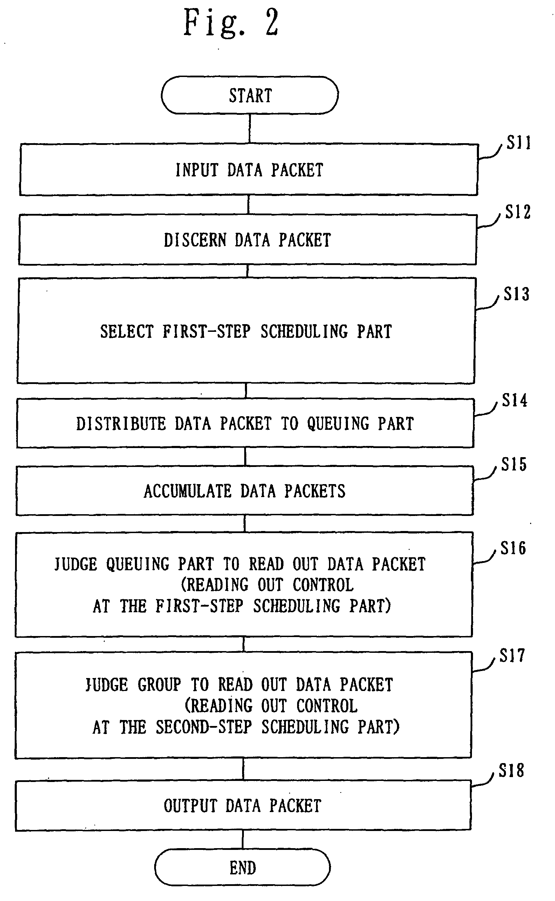

Next, operations will be explained with reference to Fig. 2. Fig. 2 is a flowchart showing an example of operations of the packet scheduling system (method) of Embodiment 1.

The queuing destination judging part 5 inputs a data packet (S11). As to the input data packet, discerning (distinguishing) is performed to find to which of the m groups the input data packet belongs and to which of the n quality classes the input data packet belongs (S12).

Based on the discerning result, the queuing destination judging part 5 selects one of the m first-step scheduling parts 6-1∼6-m (S13). Then, in the selected first-step scheduling part, the queuing destination judging part 5 distributes the input data packet to one of the queuing parts 7-1∼7-n provided to be corresponding to the n quality classes. (S14). In the first-step scheduling parts 6-1∼6-m, the queuing parts 7-1∼7-n provided to be corresponding to the n quality classes accumulate data packets distributed by the queuing destination judging part 1 (S15).

Based on an accumulation state of data packets in each of the queuing parts 7-1∼7-n provided to be corresponding to the n quality classes and a priority of each quality class, the read-out control part 8 selects (judges) one queuing part to read in the queuing parts 7-1∼7-n provided to be corresponding to the n quality classes. Then, the read-out control part 8 sends an instruction to read out the accumulated data packets to the selected queuing part 7 in the queuing parts 7-1∼7-n. Simultaneously, the read-out control part 8 sends the selection part 9 an instruction to select the selected queuing part, and then a data packet is output from each of the m groups (S16).

In addition, it is also acceptable that the selection part 9 which has input the instruction to select sends the instruction to read out to the queuing part.

Next, the following reading out control is performed in the second-step scheduling part 10. The read-out control part 11 provided in the second-step scheduling part 10 is linked to the read-out control parts 8 in the m first-step scheduling parts 6-1∼6-m and controls reading out according to bandwidth allocation corresponding to each of the m groups. Simultaneously, the read-out control part 11 sends the selection part 12 an instruction to select data packets of one first-step scheduling part selected from the m first-step scheduling parts 6-1∼6-m (S17). The first-step schedule parts 6-1∼6-m define (setup) a band for each of the m groups beforehand, and hold them as band control information. Thus, one first-step scheduling part to output a data packets is selected from the m first-step scheduling parts 6-1∼6-m, and the data packet is output (S18).

According to the present Embodiment, in packet scheduling for a plurality of groups like a VPN service, a scheduling part (the first-step scheduling part) which performs scheduling per group is included, and further another scheduling part (the second-step scheduling part) which performs scheduling among a plurality of groups on an output interface is included. Thus, even when a plurality of groups is accommodated by using one output interface, reading out according to the bandwidth allocation per group can be executed. Moreover, a bandwidth guarantee per group is attained.

Furthermore, by performing scheduling corresponding to the quality classes, it becomes possible for the scheduling part which performs scheduling per group to perform priority transfer and band securing corresponding to an application for each group.

Thus, according to the present Embodiment, the traffic interference between a plurality of groups can be removed, and traffic of a plurality of different quality classes in each group can be effectively treated. Therefore, there is an effect that quality improvement can be easily attained.

As mentioned above, the packet scheduling system and method according to Embodiment 1 is applied to the packet switching apparatus which distributes data packets input from one or a plurality of input interfaces to one or a plurality of output interfaces, and includes the following (1) - (3) :
(1) The queuing destination judging part which distributes data packets input from a plurality of input interfaces above-mentioned.
(2) The first-step scheduling part including a plurality of queuing parts which accumulate data packets distributed by the queuing destination judging part per each of a plurality of specific groups, and the read-out control part which reads out one data packet from a plurality of the queuing parts.
(3) The second-step scheduling part having a plurality of the first-step scheduling parts corresponding to a plurality of specific groups and including the read-out control part which reads a data packet from the first-step scheduling parts corresponding to a plurality of the specific groups.

Moreover, it is characterized by the following:

A plurality of specific groups corresponds to enterprise groups, user groups, service groups of a network, etc., which the VPN service typifies.

The queuing part of the first-step scheduling part is provided to be corresponding to a priority class which is applied to a data packet in advance, an application, a user, a company, a combination of them, etc.

The read-out control part of the first-step scheduling part controls reading out by priority control, RR (Round Robin) control which simply reads a queue in order, WRR (Weighted Round Robin) control which assigns a weight to a queue and reads it according to a ratio of the weight, WFQ (Weighted Fair Queuing) control, a combination of them, etc.

The read-out control part of the second-step scheduling part, like the read-out control part of the first-step scheduling part, corresponds to priority control, RR control which simply reads a queue in order, WRR control which assigns a weight to a queue and reads it according to a ratio of the weight, WFQ control, a combination of them, etc. and is provided to be corresponding to a priority class which is applied to a data packet in advance, an application, a user, a company, a combination of them, etc.

The queuing destination judging part distributes a data packet to be corresponding to a combination of the group above-mentioned group and the queuing part of each group.

### Embodiment 2

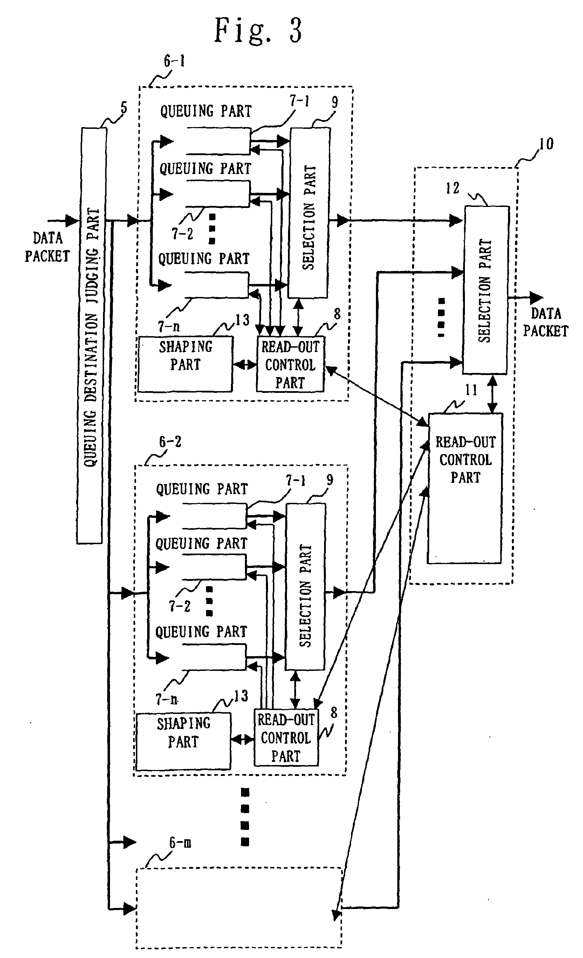

Embodiment 2 of the present invention will now be explained with reference to a figure. Fig. 3 shows an example of the packet scheduling system according to Embodiment 2. The packet scheduling system of Fig. 3 has the configuration where a shaping part 13 is added to the packet scheduling system of Fig. 1. Since the configuration elements having the same references as those in Fig. 1 are the same as those of Embodiment 1, explanations for them are omitted.

The shaping part 13 is arranged in the first-step scheduling parts 6-1∼6-m, linked to the read-out control part 8, and imposes a restriction on the read-out band of a data packet. The shaping part 13 defines (sets up) a band for each of the m groups beforehand, and holds them as band control information.

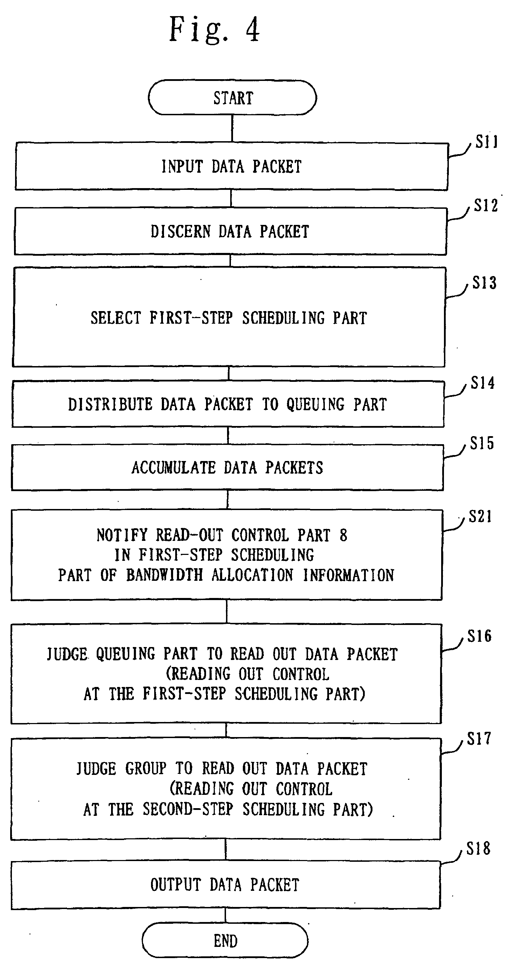

Next, operations will be explained with reference to Fig. 4. Fig. 4 is a flowchart showing an example of operations of the packet scheduling system (method) of Embodiment 2. Operations having the same step numbers (Sxx) as those in Fig. 2 are the same operations as those explained in Embodiment 1.

The queuing destination judging part 5 inputs a data packet (S11). As to the input data packet, discerning (distinguishing) is performed to find out the m groups and the quality classes (S12).

Based on the discerning result, the queuing destination judging part 5 selects one of the m first-step scheduling parts 6-1∼6-m (S13). Then, in the selected first-step scheduling part, the queuing destination judging part 5 distributes the input data packet to one of the queuing parts 7-1∼7-n provided to be corresponding to the n quality classes. (S14). In the first-step scheduling parts 6-1∼6-m, the queuing parts 7-1∼7-n provided to be corresponding to the n quality classes accumulate data packets distributed by the queuing destination judging part 1 (S15).

The shaping part 13 notifies the read-out control part 8 of bandwidth allocation information (read-out bandwidth allocation information) about a read-out bandwidth allocation for each group (S21). Since the bandwidth allocation information restricts a band, it is also called band restriction information.

Based on an accumulation state of data packets in each of the queuing parts 7-1∼7-n provided to be corresponding to the n quality classes, a priority of each quality class, and the bandwidth allocation information notified by the shaping part 13, the read-out control part 8 selects (judges) one queuing part to read in the queuing parts 7-1∼7-n provided to be corresponding to the n quality classes. Then, the read-out control part 8 sends an instruction to read out the accumulated data packets to the selected queuing part 7 in the queuing parts 7-1∼7-n. Simultaneously, the read-out control part 8 sends the selection part 9 an instruction to select the selected queuing part, and then a data packet is output from each of the m groups (S16).

Next, the following reading out control is performed in the second-step scheduling part 10. The read-out control part 11 provided in the second-step scheduling part 10 is linked to the read-out control parts 8 in the m first-step scheduling parts 6-1∼6-m and controls reading out according to bandwidth allocation corresponding to each of the m groups. Simultaneously, the read-out control part 11 sends the selection part 12 an instruction to select data packets of one first-step scheduling part selected from the m first-step scheduling parts 6-1∼6-m. (S17). Thus, one first-step scheduling part to output a data packet is selected from the m first-step scheduling parts 6-1∼6-m, and the data packet is output (S18).

According to the present Embodiment, in packet scheduling for a plurality of groups like a VPN service, a scheduling part (the first-step scheduling part) which performs scheduling per group is included, and further another scheduling part (the second-step scheduling part) which performs scheduling among a plurality of groups on an output interface is included. Thus, even when a plurality of groups is accommodated by using one output interface, reading out according to the bandwidth allocation per group can be executed. Moreover, a bandwidth guarantee per group is attained.

Furthermore, by performing scheduling corresponding to the quality classes, it becomes possible for the scheduling part which performs scheduling per group to perform priority transfer and band securing corresponding to an application for each group.

In addition, by providing the scheduling part which performs scheduling per group with a shaping function, it becomes possible to impose a restriction on the output band of each group, or to equalize burst characteristics of a data packet.

Thus, according to the present Embodiment, the traffic interference between a plurality of groups can be removed, and traffic of a plurality of different quality classes in each group can be effectively treated. Therefore, there is an effect that quality improvement can be easily attained.

As mentioned above, the packet scheduling system according to Embodiment 2 is applied to the packet switching apparatus which distributes data packets input from one or a plurality of input interfaces to one or a plurality of output interfaces, and includes the following (1) - (3):
(1) The queuing destination judging part which distributes data packets input from a plurality of input interfaces above-mentioned.
(2) The first-step scheduling part including a plurality of queuing parts which accumulate data packets, distributed by the queuing destination judging part, per each of a plurality of specific groups, the read-out control part which reads out one data packet from a plurality of the queuing parts, and the shaping part which is linked to the read-out control part and imposes a restriction on the read-out band of a data packet.
(3) The second-step scheduling part having a plurality of the first-step scheduling parts corresponding to a plurality of specific groups, and including the read-out control part which reads a data packet from the first-step scheduling parts corresponding to a plurality of the specific groups.

### Embodiment 3

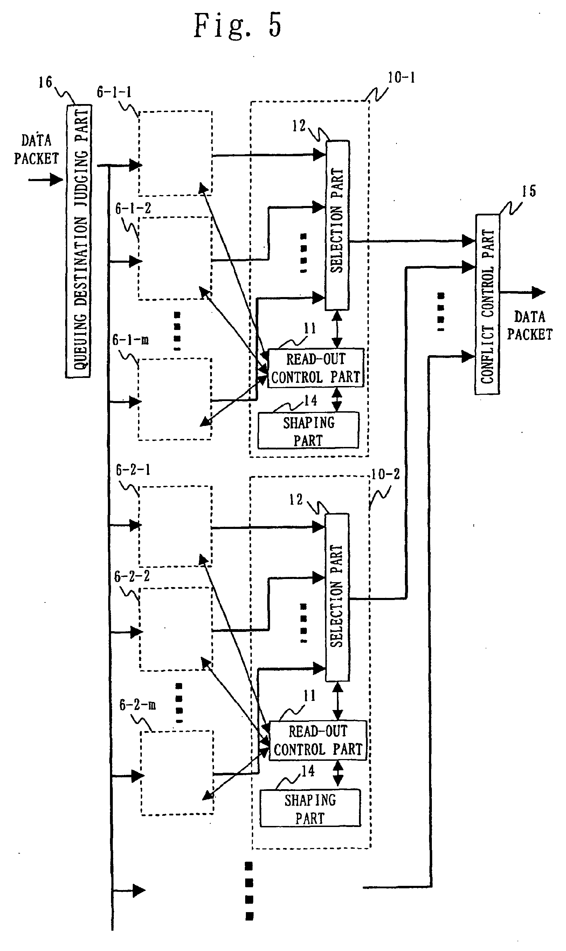

Embodiment 3 according to the present invention will now be explained with reference to Fig. 5. Fig. 5 shows an example of a scheduling system in the case of one output interface including x ports.

A queuing destination judging part 16 inputs a data packet, and distributes the input data packet. The different respect from the queuing destination judging part 5 of Embodiment 1 is that the queuing destination judging part 16 distributes the data packet with discerning the x ports in addition to discerning the m groups and the n quality classes.

First-step scheduling parts 6-1-1∼6-x-m are provided to be corresponding to m groups included in each of the x ports, and perform scheduling with respect to quality classes in each of the groups. The configuration of the first-step scheduling parts 6-1-1∼6-x-m is the same as that of the first-step scheduling parts 6-1∼6-m of Embodiment 1. The respect that the first-step scheduling parts 6-1-1∼6-x-m are provided in each of the x ports is different from Embodiment 1. In Fig. 5, the internal configuration of the first-step scheduling parts 6-1-1∼6-x-m is not shown. The number of the first-step scheduling parts 6-1-1∼6-x-m to be provided is m Xx.

Second-step scheduling parts 10-1∼10-x are provided to be corresponding to the x ports, and perform scheduling for outputs from the first-step scheduling parts 6-1-1∼6-x-m.

A conflict control part 15 controls conflict of data packets output from the second-step scheduling parts 10-1∼10-x provided to be corresponding to the x ports, selects a data packet to output and outputs the selected data packet.

Each of the second-step scheduling parts 10-1∼10-x provided to be corresponding to the x ports includes a read-out control part 11, a shaping part 14, and a selection part 12.

The read-out control part 11 reads out outputs from m first-step scheduling parts 6-1-1∼6-x-m according to bandwidth allocation for each of the m groups.

The shaping part 14 is linked to the read-out control part 11 and imposes a restriction on a read-out band of a data packet.

The selection part 12 selects one of the data packets output from the m first-step scheduling parts 6-1-1∼6-x-m, based on control of the read-out control part 11.

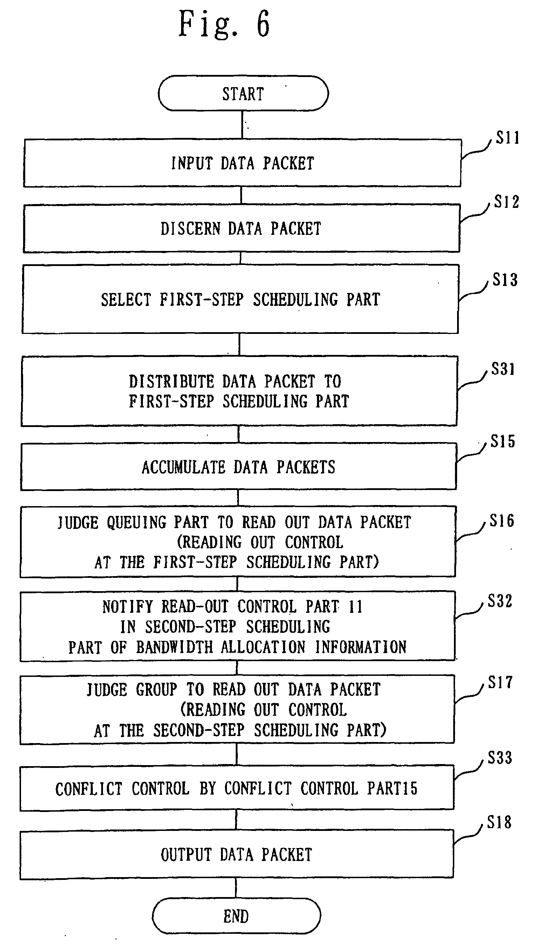

Next, operations will be explained with reference to Fig. 6. Fig. 6 is a flowchart showing an example of operations of the packet scheduling system (method) according to Embodiment 3. Operations having the same step numbers (Sxx) as those in Fig. 2 are the same operations as those explained in Embodiment 1.

The queuing destination judging part 16 inputs a data packet (S11). As to the input data packet, discerning is performed to find to which of the x ports of one output interface the input data packet belongs, to which of the m groups the input data packet belongs, and to which of the n quality classes the input data packet belongs (S12).

Based on the discerning result, the queuing destination judging part 16 selects one of the mXx first-step scheduling parts 6-1-1∼6-x-m (S13), and distributes the input data packet to the selected first-step scheduling part (S31).

Moreover, like Embodiment 1, the queuing destination judging part 16 further distributes the data packet which has been distributed to the selected first-step scheduling part, to the queuing parts (not shown in Fig. 5) provided to be corresponding to the n quality classes in the selected first-step scheduling part (S14 in Fig. 2).

The queuing part accumulates the distributed data packets (S15).

The xXm first-step scheduling parts 6-1-1∼6-x-m operate like the first-step scheduling parts 6-1∼6-m in Embodiment 1 and Embodiment 2 , and output data packets according to the quality classes per group of the m groups (S16).

Next, operations of a second-step scheduling part 10-1 corresponding to a first output port (x=1), which is in the second-step scheduling parts 10-1∼10-x respectively corresponding to the x output ports of one output interface, will now be explained.

The shaping part 14 notifies the read-out control part 11 of the second-step scheduling part 10-1 of the read-out bandwidth allocation information (bandwidth allocation information) about the read-out bandwidth allocation of each group (S32).

Based on a accumulation state of data packets in the m first-step scheduling parts 6-1-1∼6-1-m and the bandwidth allocation information notified by the shaping part 14, the read-out control part 11 selects (judges) one first-step scheduling part to read in the m first-step scheduling parts 6-1-1∼6-1-m. Then, a data packet is output from the selected first scheduling part.

Thus, based on the bandwidth allocation information notified by the shaping part 14, the read-out control part 11 of the second-step scheduling part 10-1 corresponding to the first output port (x=1) imposes a restriction on the read-out band and controls reading out based on bandwidth allocation of each of the m groups with being linked to the read-out control parts of the m first-step scheduling parts 6-1-1∼6-1-m. Simultaneously, the read-out control part 11 sends an instruction to select to the selection part 12, selects an output from the m first-step scheduling parts 6-1-1∼6-1-m, and outputs the data packet.

The second-step scheduling parts 10-1∼10-x respectively corresponding to other x output ports has the same operations as those of the second-step scheduling part 10-1 corresponding to the first output port.

The conflict control part 15 controls conflict of data packets output from the second-step scheduling part 10-1∼10-x of each of the x ports (S33), and outputs a data packet based on an output band of the output interface (S18).

According to the present Embodiment, in packet scheduling for a plurality of groups like a VPN service, a scheduling part (the first-step scheduling part) which performs scheduling per group is included, and further another scheduling part (the second-step scheduling part) which performs scheduling among a plurality of groups on an output interface is included. Thus, even when a plurality of groups is accommodated by using one output interface, reading out according to the bandwidth allocation per group can be executed. Moreover, a bandwidth guarantee per group is attained.

Furthermore, by performing scheduling corresponding to the quality classes, it becomes possible for the scheduling part which performs scheduling per group to perform priority transfer and band securing corresponding to an application for each group.

In addition, by providing the scheduling part which performs scheduling per group with a shaping function, it becomes possible to impose a restriction on the output band of each group, or to equalize burst characteristics of a data packet.

Thus, even when a plurality of ports is included in one output interface, the traffic interference between a plurality of groups can be removed like VPN, and traffic of a plurality of different quality classes in each group can be effectively treated. Therefore, there is an effect that quality improvement can be easily attained.

As mentioned above, the packet scheduling system according to Embodiment 3 is applied to the packet switching apparatus which distributes data packets input from a plurality of input interfaces to a plurality of output interfaces. In the packet scheduling system of Embodiment 1 and Embodiment 2, the packet scheduling system according to Embodiment 3 corresponds to the packet switching apparatus including a plurality of ports in the output interface, and includes the first-step scheduling part and the second-step scheduling part which are provided for each port. Furthermore, the shaping part which imposes a restriction on the read-out band with being linked to the read-out control part is included in the second-step scheduling part. The second-step scheduling part performs shaping on the output band of the port and selects a data packet to output. The conflict control part controls conflict of m data packets to output selected by the m first-step scheduling parts and outputs them.

### Embodiment 4

In Embodiments from 1 to 3, the case that the read-out control part 8 judges based on a accumulation state of a data packet and a priority of a quality class when selecting a queuing part to output a data packet has been described. However, it is not restricted to this case. It is also acceptable for the read-out control part 8 to assign a weight to a quality class and judge by using the weight. Moreover, it is also acceptable to use a combination of a priority of a quality class and a weight. Other means are also acceptable.

Furthermore, it is acceptable for the read-out control part to utilize control (RR control) of selecting a plurality of queuing parts in order, control (WRR control) of setting up weights for a plurality of queuing parts respectively and selecting one queuing part based on the weights having been set up, WFQ control, a combination of these controls, etc.

### Embodiment 5

In Embodiments from 1 to 3, the case that scheduling of packets is performed based on quality classes and prevention of interference of traffic between a plurality of groups, which VNP typifies, has been described. However, it is not restricted to this case. It is also possible to apply the packet scheduling system shown in Fig. 1, Fig. 3, and Fig. 5 as an example, even when performing scheduling of packets based on elements other than the above.

### Embodiment 6

In Embodiments from 1 to 3, the case that data packets are input from a plurality of input interfaces and output to one output interface has been described as an example. Moreover, the scheduling system according to the present invention is also effective when relaying a data packet from one input interface to one output interface, or from a plurality of input interfaces to a plurality of output interfaces. For example, the case of relaying from one input interface to one output interface is now considered. If the data transmission capacity of the input interface is larger than the data transmission capacity of the output interface, it is necessary to perform scheduling for data packets. Thus, the scheduling system according to the present invention can be effectively applied.

### Industrial Applicability

According to the preferred Embodiments of the present invention, scheduling of data packets can be performed based on quality classes and a data accumulation state. Moreover, it is possible to assign bandwidth allocation to each of a plurality of groups and perform scheduling based on the bandwidth allocation. Furthermore, traffic interference occurs in performing scheduling packets can be prevented.

Moreover, the quality of the packet scheduling system and method can be improved by having a queue for each of quality classes per group, performing scheduling at each group, and performing scheduling (scheduling of two steps) between VPNs for an output interface, and further by accommodating a plurality of groups in the same output interface, and performing a bandwidth guarantee per VPN and priority transfer and band securing corresponding to an application in VPN.

## Claims

1. A packet scheduling system which distributes a data packet inputted from at least one input interface to at least one output interface comprising:
a queuing destination judging part for inputting the data packet from the input interface and distributing the data packet inputted;
a plurality of first scheduling parts for inputting the data packet distributed by the queuing destination judging part, accumulating the data packet inputted, and controlling reading out data packet accumulated; and
a second scheduling part for inputting a plurality of data packets read out from the plurality of first scheduling parts, selecting one data packet from the plurality of data packets inputted, and outputting the one data packet selected to the output interface.

2. The packet scheduling system of claim 1,
wherein the plurality of first scheduling parts are provided to be corresponding to a plurality of groups composing a network,
the queuing destination judging part judges the data packet with respect to the plurality of groups, selects one first scheduling part from the plurality of first scheduling parts based on a judging result, and distributes the data packet to the one first scheduling part selected.

3. The packet scheduling system of claim 1,
wherein each first scheduling part of the plurality of first scheduling parts includes a plurality of queuing parts for accumulating the data packet, provided to be corresponding to a number of qualities of data packet, and
the queuing destination judging part judges the data packet with respect to the qualities, selects one queuing part from the plurality of queuing parts based on a judging result, and distributes the data packet to the one queuing part selected.

4. The packet scheduling system of claim 3, wherein each of the plurality of first scheduling parts includes
a first read-out control part for selecting one queuing part from the plurality of queuing parts and outputting an instruction to read out data packet accumulated in the one queuing part selected, and
a selection part for inputting the instruction from the first read-out control part, selecting the data packet accumulated in the one queuing part and reading out the data packet selected to the second scheduling part.

5. The packet scheduling system of claim 4, wherein the first read-out control part selects one queuing part by using at least one of control of selecting the plurality of queuing parts in order, control of assigning a weight to each of the plurality of queuing parts and selecting one queuing part based on an assigned weight, and control of selecting one queuing part based on an accumulation state of each of the plurality of queuing parts.

6. The packet scheduling system of claim 4,
wherein each of the plurality of first scheduling parts further includes a first shaping part for generating bandwidth allocation information which defines a band allocated to each of the plurality of queuing parts when selecting one queuing part from the plurality of queuing parts, and
the first read-out control part selects one queuing part, based on the bandwidth allocation information generated by the first shaping part.

7. The packet scheduling system of claim 1,
wherein the plurality of first scheduling parts are provided to be corresponding to a plurality of groups composing a network,
each of the plurality of first scheduling parts includes a plurality of queuing parts for accumulating the data packet, provided to be corresponding to a number of qualities of data packet, and
the queuing destination judging part judges the data packet with respect to the plurality of groups and the qualities, selects one first scheduling part from the plurality of first scheduling parts based on a judging result, and distributes the data packet to the one first scheduling part selected.

8. A packet scheduling system which distributes a data packet inputted from at least one input interface to at least one output interface comprising:
a queuing destination judging part for inputting the data packet from the input interface and distributing the data packet inputted;
a plurality of first scheduling parts for inputting the data packet distributed by the queuing destination judging part, accumulating the data packet inputted, and controlling reading out data packet accumulated;
a plurality of second scheduling parts for inputting a plurality of data packets read out from the plurality of first scheduling parts, and controlling outputting the plurality of data packets inputted; and
a conflict control part for inputting the plurality of data packets output one by one from each of the plurality of second scheduling parts, selecting one data packet from the plurality of data packets inputted, and outputting the one data packet selected to the output interface.

9. The packet scheduling system of claim 8,
wherein each of the plurality of first scheduling parts includes a plurality of queuing parts for accumulating the data packet, provided to be corresponding to a number of qualities of data packet, and
the queuing destination judging part judges the data packet with respect to the qualities, selects one queuing part from the plurality of queuing parts based on a judging result, and distributes the data packet to the one queuing part selected.

10. The packet scheduling system of claim 8,
wherein the output interface includes a plurality of ports,
the plurality of first scheduling parts are provided to be corresponding to a plurality of groups composing a network,
the plurality of second scheduling parts are provided to be corresponding to the plurality of ports, and related to the first scheduling part, and
the queuing destination judging part judges the data packet based on the plurality of groups and the plurality of ports, selects one first scheduling part from the plurality of first scheduling parts based on a judging result, and distributes the data packet to the one first scheduling part selected.

11. The packet scheduling system of claim 8,
wherein the each of the plurality of second scheduling parts includes:
a second shaping part for generating bandwidth allocation information which defines a band allocated to each of the plurality of first scheduling parts when selecting one first scheduling part from the plurality of first scheduling parts,
a second read-out control part for selecting one first scheduling part from the plurality of first scheduling parts, based on the bandwidth allocation information generated by the second shaping part, and sending an instruction to output the data packet inputted from the one first scheduling part selected, and
a selection part for inputting the instruction from the second read-out control part, and outputting the data packet inputted from the one first scheduling part selected to the conflict control part, based on the instruction inputted.

12. The packet scheduling system of claim 8,
wherein the output interface includes a plurality of ports,
the plurality of first scheduling parts are provided to be corresponding to a plurality of groups composing a network, and each of the plurality of first scheduling parts includes a plurality of queuing parts for accumulating the data packet, provided to be corresponding to a number of a plurality of qualities of data packet,
the plurality of second scheduling parts are provided to be corresponding to the plurality of ports, and related to the first scheduling part, and
the queuing destination judging part judges the data packet with respect to the plurality of qualities, the plurality of groups, and the plurality of ports, selects one first scheduling part from the plurality of first scheduling parts based on a judging result, and distributes the data packet to the one first scheduling part selected.

13. A packet scheduling method which distributes a data packet inputted from at least one input interface to at least one output interface, through a plurality of first scheduling parts which perform scheduling based on a quality of the data packet and a second scheduling part which performs scheduling based on a plurality of groups composing a network, the packet scheduling method comprising:
inputting the data packet from the input interface;
discerning the data packet inputted, based on the quality of the data packet and the plurality of groups;
distributing the data packet to one of the plurality of first scheduling parts, based on a discerning result;
accumulating the data packet distributed, in the plurality of first scheduling parts;
discerning reading out of the data packet accumulated, based on the quality;
reading out the data packet from the plurality of first scheduling parts to the second scheduling part, based on a discerning result;
discerning a plurality of data packets inputted into the second scheduling part with respect to the plurality of groups;
selecting one data packet from the plurality of data packets, based on a discerning result; and
outputting the data packet selected to the output interface.
